Europäisches Patentamt

European Patent Office

Office européen des brevets

(19)

(11) Veröffentlichungsnummer: **0 401 487**

**A2**

(12) **EUROPÄISCHE PATENTANMELDUNG**

(21) Anmeldenummer: **90106617.5**

(22) Anmeldetag: **06.04.90**

(51) Int. Cl.5: **A01K 13/00**

(30) Priorität: **07.04.89 DE 3911370**

(43) Veröffentlichungstag der Anmeldung:
**12.12.90 Patentblatt 90/50**

(84) Benannte Vertragsstaaten:
**CH DE FR GB IT LI**

(71) Anmelder: **EQUITECH
BETEILIGUNGSGELLSCHAFT Für Anlagenbau
M.b.H.
Velsen 55
D-4410 Warendorf(DE)**

(72) Erfinder: **Miltrup, Ernst**

**D-4425 Billerbeck(DE)**
Erfinder: **Leve, Ferdinand
Velsen 55
D-4410 Warendorf(DE)**

(74) Vertreter: **Meldau, Gustav, Dipl.-Ing. et al
Vennstrasse 9
D-4830 Gütersloh 1(DE)**

(54) **Trainingsbecken für Tiere, insbesondere für Pferde.**

(57) Um ein mit Wasser befüllbares Trainingsbecken (1) für Tiere, insbesondere für Pferde, mit Längsseitenwänden (5), Schmalseitenwänden (4) und einer Bodenplatte (3), wobei mindestens eine der Schmalseitenwände (4) eine abgedichtet verschließbare Zugangsöffnung (4.1) aufweist, und wobei das Wasser mittels einer Umwälzpumpe umwälzbar und im Kreislauf aufbereitbar ist so weiterzubilden, daß ein Training eines Tieres mit unterschiedlichen, den Bedürfnissen des gerade zu trainierenden Tier optimal anzupassenden Trainingsgeschwindigkeiten gegen unterschiedliche und ebenfalls anpaßbare Widerstände und so ein kostengünstiges und ortsunabhängiges Training ermöglicht wird, und daß das Trainingsbecken (1) bei geringem Flächenbedarf praktisch überall aufstellbar ist, wird vorgeschlagen, daß das Trainingsbecken (1) containerartig ausgebildet ist und über eine mit Mitteln zur Rückflußverhinderung versehene Fülleitung (10.2, 10.23) und eine Füllpumpe (10) sowie über eine Entleerungsleitung (8.3, 8.4, 8.5) und eine Entleerungspumpe (11) mit einen Vorratsbehälter (29) ver bunden ist, wobei zumindest in der Entleerungsleitung (8.3, 8.4, 8.5) Mittel zum Reinigen des zurückfließenden Wassers vorgesehen sind, und daß über seiner Bodenplatte (3) ein über etwa die gesamte Länge des Trainingsbeckens (1) reichendes, von einem äußeren Antrieb antreibbares Laufband vorgesehen ist.

Fig.1

## Trainingsbecken für Tiere, insbesondere für Pferde

Die Erfindung betrifft ein mit Wasser befüllbares Trainingsbecken für Tiere, insbesondere für Pferde, mit Längsseitenwänden, Schmalseitenwänden und einer Bodenplatte, wobei mindestens eine der Schmalseitenwände eine abgedichtet verschließbare Zugangsöffnung aufweist, und wobei das Wasser mittels einer Umwälzpumpe umwälzbar und im Kreislauf aufbereitbar ist.

Zu sportlichen Zwecken eingesetzte Tiere müssen - ebenso wie der sie einsetzende Mensch - fit gehalten werden. Bei den vielfach zu Sportzwecken benutzten Pferden kennt man neben den üblichen Trainingseinrichtungen auch stationäre in Massivbauweise errichtete Schwimmhallen für püferde, die für Tranings-, Therapie- und Rekonvalszenz zwecke benutzt werden. Die Becken sind in konventioneller Massivbauart erstellt worden, und zwar ähnlich denen der bei uns bekannten Freibad-Anlagen für menschlichen Gebrauch. Sollen diese Anlagen ganzjährig benutzt werden, ist eine Heizung im Winter notwendig. Derartige Tier-Schwimmanlagen sind aufgrund der erheblichen Herstellungs-und Unterhaltungskosten nur begrenzt herstellbar. Darüber hinaus sind derartige Großanlagen stets mit einem erheblichen Verbrauch an Land verbunden und stellen daher einen erheblichen Eingriff in die Umwelt dar. Schließlich ist noch darauf hinzuweisen, daß - anders als bei Freibädern - die Anfahrt mit einem Tier zum nächsten Tierschwimmbad nur den Tierhaltern zugemutet werden kann, die in unmittelbarer Nähe der Anlage wohnen. Andere Tierhalter bleiben davon ausgeschlossen.

Tiere, die in erhöhtem Maße beansprucht werden, beispielsweise Pferde, die im Bereich des Reit- oder Rennsportes eingesetzt sind, bedürfen besonderer Trainingsmaßnahmen, für die nicht immer die geeigneten Trainingsstätten zur Verfügung stehen. Hinzu kommt, daß ein größerer Trainingseffekt erzielt wird, wenn das Training gegen einen Widerstand stattfindet, so werden neben der Muskulatur auch das Durchhaltevermögen und die Ausdauer gestärkt. Dies gilt auch für rekonvaleszente Tiere, bei denen das Ziel des Trainings allerdings nicht auf die Höchstleistung abgestellt ist, sondern auf die Wiederherstellung der ursprünglichen Leistungsform. Gleiches gilt selbstverständlich auch für die Behandlung von Krankheiten oder Schäden an Skelett, Gelenken oder Muskulatur einschließlich des Sehnenapparates.

Aus dem DE-GM 89 00 025 ist bereits eine Vorrichtung bekannt, mit deren Hilfe ein Pferd einer Hydrotherapie unterzogen werden kann, etwa in Form einer Unterwasser-Strahlmassage. Dazu wird ein mit Wasser befüllbares Becken für Tiere, insbesondere für Pferde, vorgeschlagen, mit Längsseitenwänden, Schmalseitenwänden und einer Boden platte, wobei mindestens eine der Schmalseitenwände eine abgedichtet verschließbare Zugangsöffnung aufweist, und wobei das Wasser mittels einer Umwälzpumpe umwälzbar und im Kreislauf aufbereitbar ist. Die Wasserumwälzung erfolgt über die Wasserentnahme aus dem das Becken bildenden Trog mit einer Saug-Druckpumpe, wobei diese das entnommene Wasser über ein Ringleitungssystem wieder in den Trog einspeist, insbesondere über Strahldüsen. Weitere Badevorrichtungen für Tiere beschreibt die DE-OS 27 32 820, die ein von einem Fahrzeug ziehbare Badewanne für Schafe betrifft. Der Trog dieser Schaf-Badewanne, die mit Längsseiten- und Schmalseitenwänden sowie mit einer Bodenplatte versehen ist, die jedoch keine abgedichtet verschließbare Zugangsöffnung aufweist, da der Zu- und Abgang wegen des Durchtreibens über Rampen erfolgt. Das Wasser wird mittels einer Umwälzpumpe umgewälzt, wobei im Kreislauf eine Heizung für das Wasser vorgesehen ist. Es sind auch schon Trainingsanlagen für Pferde bekannt, die mittels eines Laufbandes erlauben, ein Tier, insbesondere ein Pferd zu trainieren (WO 89/02217). Bei diesem Vorschlag wird eine Box für das Tier, die mit einer mit einem Gatter verschließbaren Zugangsöffnung versehen ist, mit einem Laufband versehen, das von außen antreibbar, die entspechend der Antriebsgeschwindigkeit unterschiedliche Trainingsgeschwindigkeiten vorgibt.

Hier setzt die Erfindung ein, der die Aufgabe zugrunde liegt, ein Trainingsbecken vorzuschlagen, das ein Training eines Tieres mit unterschiedlichen, den Bedürfnissen des gerade zu trainierenden Tier optimal anzupassenden Trainingsgeschwindigkeiten gegen unterschiedliche und ebenfalls anpaßbare Widerstände ermöglicht, das ein kostengünstiges und ortsunabhängiges Training ermöglicht und das einen so geringen Flächenbedarf aufweist, daß es praktisch überall aufstellbar ist.

Die Erfindung löst diese Aufgabe für ein Trainingsbecken der Gattung gemäß Oberbegriff des Hauptanspruchs mit den in dem Kennzeichen des Hauptanspruchs enthaltenen Merkmalen; vorteilhafte Weiterbildungen und bevorzugte Ausführungsformen beschreiben die Unteransprüche.

In dem Trainingsbecken kann das zu trainierende Tier untergebracht werden, wobei die öffenbare Zugangsöffnung ein direktes Einbringen erlaubt. Der containerartig ausgebildete Behälter des Trainingsbeckens selbst kann mit den aus der Container-Beförderungstechnik bekannten Mittel beliebig umzusetzen, verladen und so an andere Orte verbracht werden, das Trainingsbecken ist somit mobil. Die Grundfläche eines solchen Trainingsbeckens ist sehr viel geringer als die Grundfläche für ein fest eingebautes Becken, das neben seinen festen Wänden auch eine Zugangsrampe benötigt, so daß der Flächenbedarf dem gegenüber drastisch reduziert ist. Aufgestellt wird das Trainingsbecken, dessen Statik - wie bei Containern der Speditionstechnik -dementsprechend ausgebildet ist, wobei die Höhe des maximalen Wasserstandes berücksichtigt wird, auf seinem Grundgestell. Die ortsfeste Trainingsleistung des Tieres wird auf einem Laufband erbracht, dessen Antriebsgeschwindigkeit dem Tier die Trainingsgeschwindigkeit vorgibt. Der Trainingswiderstand kann durch eine variable Füllhöhe mit Wasser von etwa Null auf Maximalleistung gesteigert werden. Trainingsgeschwindigkeit und Trainingswiderstand lassen sich so den Trainingsbedürfnissen in weiten Grenzen anpassen. Eine Ganzjahresnutzung wird durch entsprechende Heizeinrichtungen, vorzugsweise im Bodenbereich und ggfs. über einen Temperaturfühler geschaltet, erreicht, wobei eine Wärmeisolierung der Wände die Wärmeverluste verringert. Zur Wassereinsparung und zum Erreichen unterschiedlicher Füllhöhen ist ein Vorratsbehälter vorgesehen, der über eine Entleerungsleitung und eine Fülleitung mit dem Trainingsbecken verbunden ist, wobei eine Füllpumpe das Befüllen und eine Entleerungspumpe das Entleeren übernimmt. So kann die Füllhöhe auch während des Trainings langsam geändert werden und so ein Training mit ansteigendem oder mit sich verringerdem Widerstand erreicht werden. Den Rückfluß verhindernde Mittel erlauben das Abschalten der Pumpen auch dann, wenn ein Was serstandsunterschied zwischen Trainingsbecken und Vorratsbehälter einen Ausgleich des Wasserstandes erzwingen würde. In der Entleerungsleitung werden vorteilhaft Mittel zum Reinigen des dem Trainingsbecken entnommenen Wassers angeordnet, mit denen zumindest Feststoffe wie abgelöste Haare oder ausgeschiedenen Verdauungsrückstände abgeschieden werden. Diese Mittel zur Wassereinigung werden vorteilhaft der Entleerungspumpe nachgeschaltet, dadurch kann sowohl ein Druckfilters mit einem Loch- oder Spaltfiltereinsatz als auch druckloses Filters, z.B. ein Bogensiebfilter, - letzteres wird wegen des drucklosen Betriebs vor teilhaft in einer Höhe aufgestellt, die einen einfachen Überlauf in den Vorratsbehälter ermöglicht - eingesetzt werden, wobei die Pumpe selbst auch bei einer Filterverstopfung niemals trocken laufen und so beschädigt werden kann.

Bei der beschriebenen Anlage ist das Trainingsbecken des containerartig ausgebildeten Behälters durch mindestens eine, vorteilhaft durch zwei Türen an den Kopfseiten zu Besteigen und Verlassen erreichbar. Die Türen sind mit Abstand vom Boden angeordnet und schließen das Becken nahezu in voller Breite ab. Die Türen schlagen auf eine Abdichtung und werden mit Hebelverschlüssen verriegelt, wobei die Türen zwischen Scharnieren und Dornaufsätzen und Ösen so fixiert werden, daß die Tür zwischen beiden Längsseitenwänden auftretende Zugspannungen aufnehmen kann. Die Höhenlage des "Eintritts" kann durch anstellbare Rampen überwunden werden.

Die Seitenteile des Beckens bestehen aus senkrecht angeordneten Massivholmen und einer Stahlkonstruktion mit einem Rastermaß. Sie bilden mit einer umlaufenden Bodenschwelle als Untergestell eine statisch in sich steife Konstruktion. Zwischen den Massivholmen sind Sickenbleche eingesetzt, die die Längsseiten jeweils bekleiden. Dadurch erhalten die Längsseitenwände hinreichende Stabilität, um dem statischen Wasserdruck standzuhalten. Im Inneren des Beckens sind die dem Wasser aus gesetzten Wandteile mit einer korrosionsesten Be kleidung versehen, wobei vorteilhaft eine innere Edelstahlhaut eingesetzt wird, die über die Oberkanten der Seitenwände gezogen und über die Rahmenschenkel der Türrahmen geführt ist.

Vorteilhaft ist es, wenn außen an den Behälter ein Laufsteg abnehmbar angebracht wird, damit - insbesondere bei großen Tieren wie Pferden - die Betreuung des Tieres und die Bedienung der Anlage vom Laufsteg aus erfolgen kann. Daher wird auch vorteilhat der Schaltschrank auf dem Laufsteg angeordnet; ebenso sind das Entleerungsventil und ggf. ein Kreislauf- bzw. Gegenstromventil so angeordnet, daß sie vom Laufsteg aus leicht erreichbar sind.

Das auf dem Boden des Trainingsbeckens angeordnete Laufband, das das Tier zur körperlicher Bewegung gegen einen der Füllhöhe des Wassers entsprechenden Widerstand des Wassers zwingt, wird von einer Laufbandunterlage gestützt, die ihrerseits auf einer Unterkonstruktion federnd gelagert ist. Dieser einem Schwingboden entsprechende Aufbau läßt das Laufband im mittleren Teil elastisch aufliegen. Die Belastung durch das Tier und dessen Lauf wird dabei "abgefedert". Um ein "Eintreten" in den Spalt zwischen Laufband und Seitenwand und somit mögliche Verletzungen am Huf oder am Bein zu verhindern, sind beidseits Abweiser vorgesehen, die sich über die gesamte Länge erstrekken. Darüber hinaus überbrücken Anschlußstücke den freien Raum zwischen der Durchgangsöffnung und dem Laufband. Um die Reibung zwischen Laufband und Laufbandauflage herabzusetzen, wird vorteilhaft eine Kunststoffauflage auf der Laufbandauflage vorgesehen. Diese Kunststoffauflage - ein Verschleißteil - ist dabei auswechselbar auf der Laufbandauflage befestigt.

Ein Kreislaufbetrieb des Trainingsbeckens wird durch ein in der Entleerungsleitung angeordnetes, der Entleerungspumpe nachgeschaltetes Kreislaufventil erreicht, das die Entleerungsleitung mit der Fülleitung verbindet, wobei die Entleerungspumpe als Kreislaufpumpe arbei tet. Dabei ist in der Entleerungsleitung der Abzweig der Kreislaufverbindung ein Entleerungsventil nachgeschaltet, um beim Umschalten auf Kreislauf den Rückfluß zum Vorratsbehälter drosseln oder unterbrechen zu können, wobei es sich von selbst versteht, daß das Entleerungsventil und das Kreislaufventil als Drei-Wege-Ventil zusammengefaßt beide Funktionen übernehmen kann. Es versteht sich ebenfalls von selbst, das die Verbindung beider Leitungen auch vor der Entleerungspumpe angeordnet sein kann, dann mündet die Verbindung jedoch auf der Saugseite der Füllpumpe, die dann die Aufgabe einer Kreislaufpumpe übernimmt. Das im Kreislauf geführte Wasser - und darüber hinaus auch das im Rücklauf zum Vorratsbehälter geführte oder abzuleitende Wasser - kann entsprechend den Erfordernissen oder den Bedürfnissen aufbereitet werden. Dazu dient in erster Linie ein in der Entleerungsleitung vorteilhaft der Entleerungspumpe nachgeschaltetes Feststoffilter. Diese Aufbereitung schließt beim Betrieb von Gegenstromdüsen auch eine dem Schutz der Düsen dienende Reinigungsstufe ein. Darüberhinaus bietet sich die Entkeimung an, wobei das Wasser durch eine UV-Bestrahlungsstrecke geleitet wird, in deren ultravioletten Strahlungsfeld eine Vielzahl von Keimen abgetötet werden. Schließlich kann im Kreislauf auch eine Nacherwärmung erfolgen, ggfs. zusammen mit der UV-Behandlung, wobei ein Temperaturfühler zur Begrenzung oder zur Regelung mit dem Nacherwärmer zusammenwirkend eingesetzt sein kann. Es versteht sich von selbst, daß eine Wasseraufbereitung mit einem Kreislauf aus dem Trainingsbecken auch ohne Gegenstromanlagen, allein zur Erhaltung einer gewünschten Wasserqualität im Trainingsbecken erfolgen kann.

Nach dem Einführen des Tieres in das Trainingsbecken wird das Trainingsbecken bis zur gewünschten Höhe geflutet und das Laufband in Betrieb genommen. Das Tier ist gezwungen sich im Wasser zu bewegen, wobei der Widerstand gegen diese Beweging mit steigendem Wasserstand zunimmt. Bei hinreichend großer Füllhöhe wird das Tier versuchen, zu schwimmen. In diesem Fall muß das Wasser im Kreislauf gefahren wer den, wobei die Wassereinleitung über Gegenstromdüsen erfolgt, die ein derartige Strömung erzeugen, daß ein Schwimmen der Tieres "am Ort" möglich wird. Damit es dabei in richtiger Position und so in Entfernung von den Schmalseitenwänden gehalten wird, ist eine als Schwimmkörper ausgebildete Trassierstange quer im Becken angeordnet, die vertikal bewegbar ist, wobei die Vertikal-Bewegung in seitlichen Führungen erfolgt. Diese Trassierstange hat dabei von der zugeordneten Schmalseitenwand den gewünschten Abstand, so daß ausreichend Beinfreiheit erhalten bleibt. Für die Führung dieser Trassierstange sind in den Seitenwänden zum Becken hin offene C-Profile vorgesehen. An den Schmalseitenwänden zwischen der Zu- bzw. Abgangsöffnung oder - mit entsprechender Düseneinstellung - an den Längsseitenwänden zwischen der als Schwimmkörper ausgebildeten Trassierstange und der zugeordneten Schmalseitenwand sind die Gegenstromdüsen z.B. paarweise einander gegenüberliegend so angeordnet. daß sich die dem Schwimmen der Tieres entsprechende Gegenströmung ergibt. Für Trainingsbecken für Pferde genügen im Regelfall drei derartige Paare.

Die Steuerung des gesamten Systems wird von dem auf dem Laufsteg in Höhe der Vorderseite befindlichen Steuerschrank geschaltet. Hier wird auch das programm des Schwimmtrainings gesteuert, ebenfalls wird von hier aus das Tier, insbesondere das Pferd, mittels eines an seinem Halfter befestigten Strickes vor der Abgrenzung gehalten. Bei dem Training insbesondere von rekonvaleszenten Pferden können darüber hinaus veterenär-medizinische Beobachtungen in bezug auf das Kreislaufverhalten (Puls, Blutdruck) von Bedeutung sein. Auch diese Überwachungen können leicht und in einfacher Weise vom Laufsteg aus vorgenommen werden.

Das vorgeschlagene Trainingsbecken bedarf keiner Massivbauweise, es ist ein mobiler Einrichtungsgegenstand. Die zum Betrieb notwendige Wassermenge ist kleiner als etwa ein Fünftel der Wassermenge, die für ein massives Becken notwendig ist. Das auf der Container-Technik aufgebaute Trainingsbecken kann umgesetzt werden, damit wird einem Pferdebesitzer ermöglicht, die Anlage immer dort aufzustellen, wo er sie gerade benötigt, z.B. für Fitnesszwecke am Rennplatz, für Trainingszwecke im Trainingslager, für Zucht- und Regenierungszwecke oder Rekonvaleszenz im Gestüt u.s.w. . Darüber hinaus lassen sich medizinisch wirksame Substanzen dem Wasser zusetzen, so daß Therapien bzw. Behandlungsmethoden während der Bewegung im Wasser ermöglicht werden. Nicht zuletzt zählen dazu auch Massagen, Sprudelbäder, Kühlen und Erwärmen. Durch das integrierte Heizsystem lassen sich die gewünschten Wassertemperaturen auch bei ungünstiger Außentemperatur erreichen; darüber hinaus kann das mobile Trainingsbecken bei ungünstiger Witterung auch in einem geschlossenen Gebäude (z.B. in einem Stall) aufgestellt werden.

Die Erfindung wird anhand der Figuren 1 bis 8 beispielhaft näher erläutert; dabei zeigen

- Figur 1 eine perspektivische Schema-Darstellung der Vorrichtung,

- Figur 2 eine Seitansicht der Vorrichtung,
- Figur 3 Ansicht von der Zugangsseite,
- Figur 4 Querschnitt durch die Vorrichtung,
- Figur 5 Längsschnitt durch die Vorrichtung,
- Figur 6 Einzelheit "Schwenktür",
- Figur 7 Einzelheit Feststoffilter,
- Figur 8 Rohrleitungsschema mit Baukomponenten.

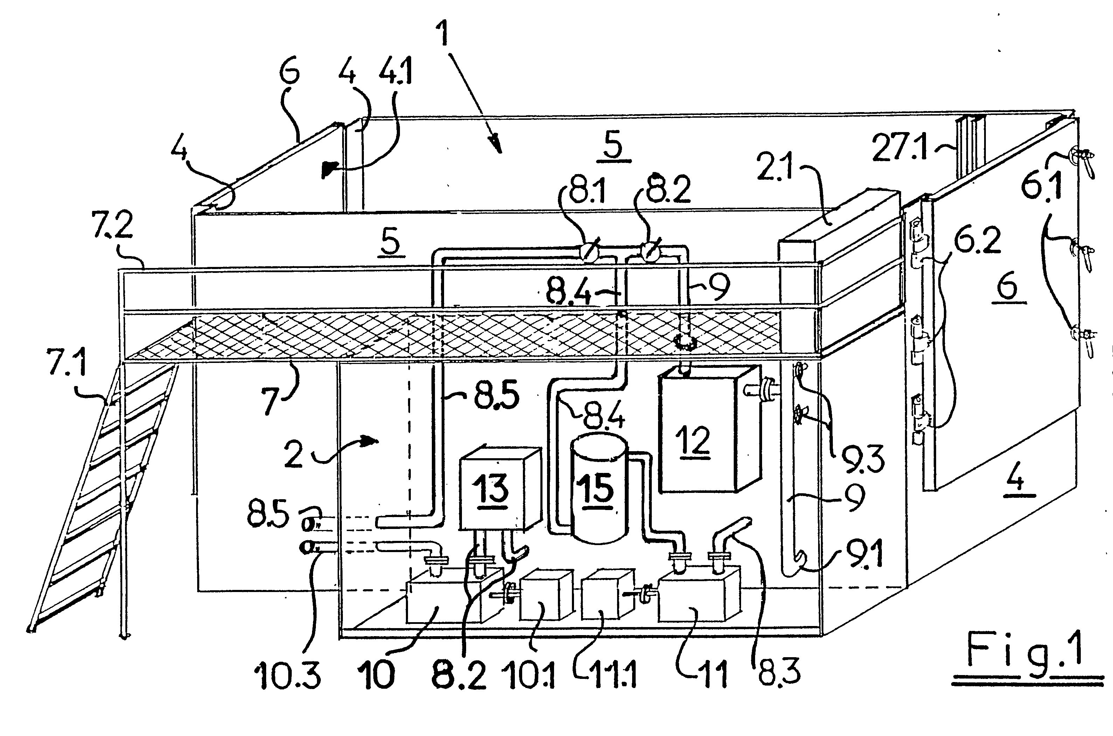

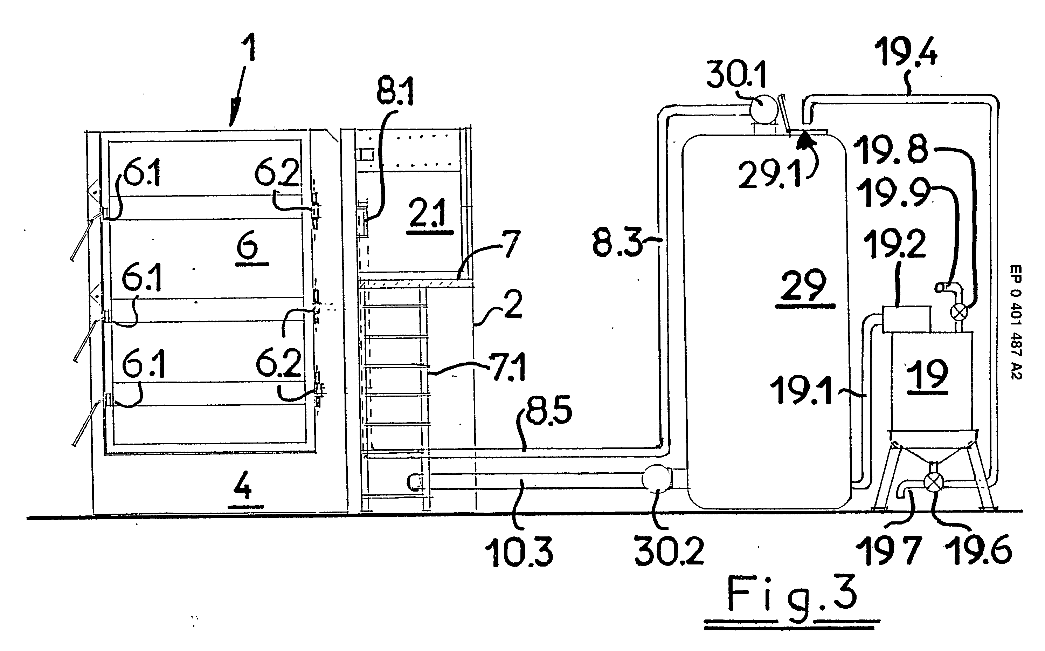

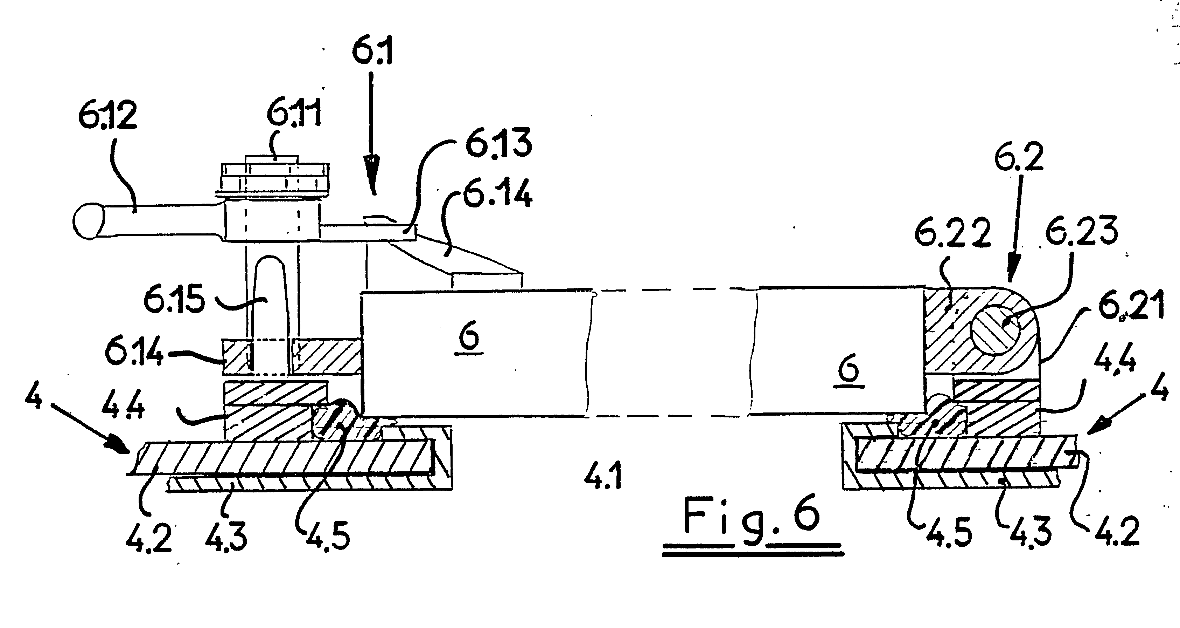

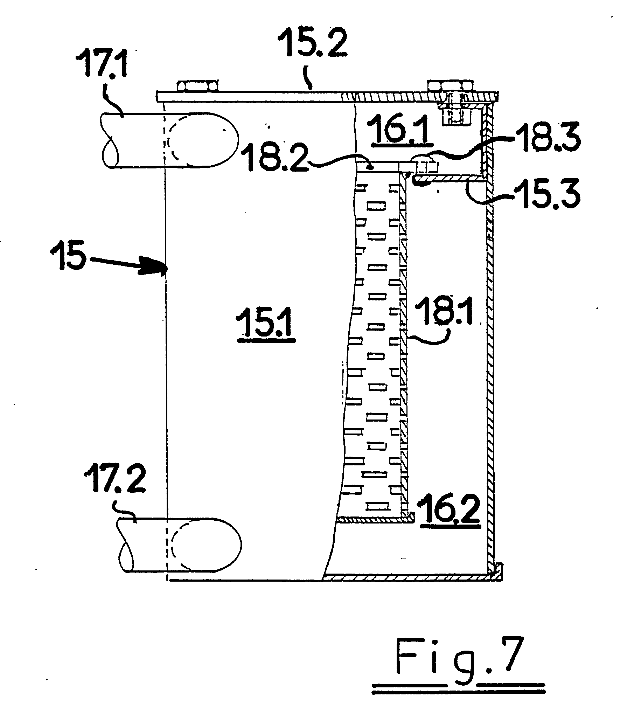

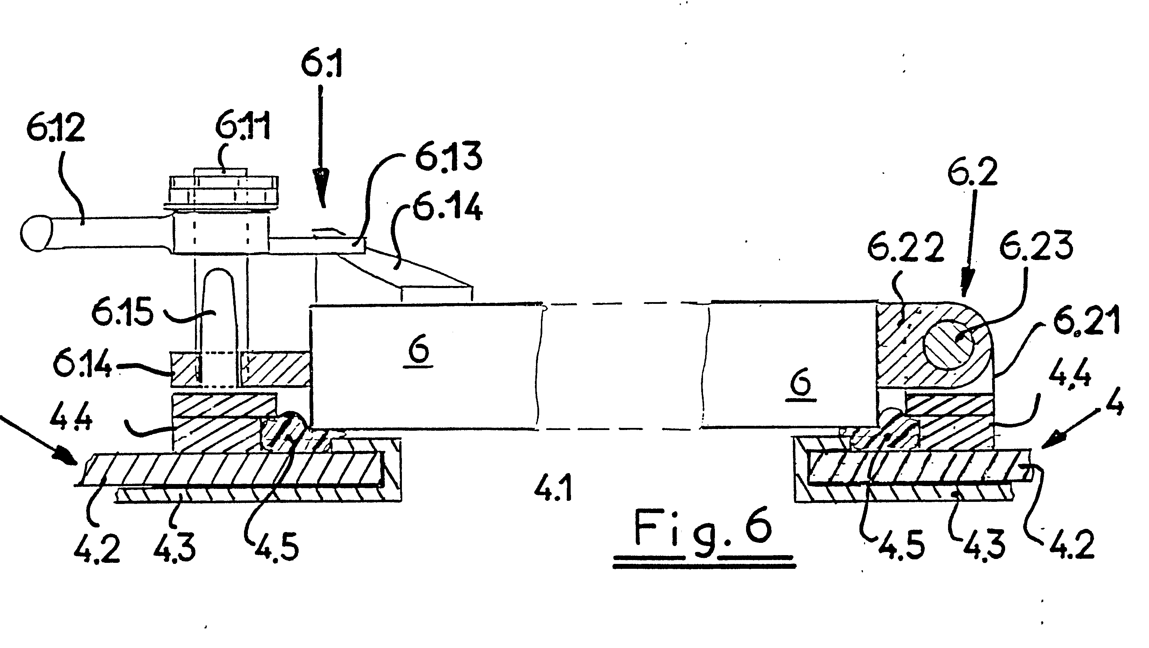

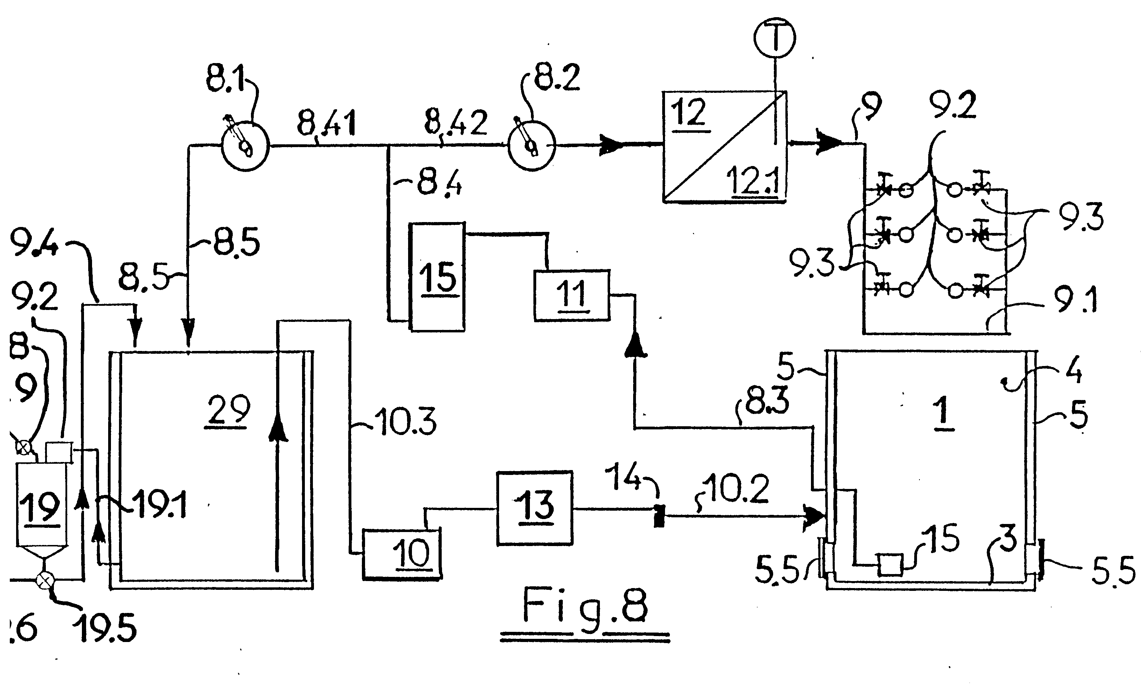

In der Figur 1 ist eine (stark schematisierte) Darstellung des Trainingsbeckens 1 der Vorrichtung wiedergegeben. Die Vorrichtung ist im wesentlichen ein oben offener Container mit den Längsseitenwänden 5 und den Schmalseitenwänden 4, der an seiner Unterseite eine ihn ab schließende Bodenplatte 3 aufweist. Die Schmalseitenwände 4 weisen Ausschnitte 4.1 als Zugang zum Trainingsbecken 1 auf, die mit Türen 6 verschlossen sind, wobei die Türen 6 mittels der Scharniere 6.2 an die Seitenwände angeschlagen und mittels der Verriegelungen 6.1 festzulegen sind. Zwischen den Kanten der Tür 6 und den Seitenwänden 4 befinden sich Dichtungen 4.5 (Figur 6), die durch das Anziehen die für die Wasserbefüllung notwendige Dichtheit herstellen. Seitlich am Container ist die Versorgungsanlage in einem "Maschinenraum" 2 untergebracht, wobei es sich von selbst versteht, daß der in Figur 1 offen dargestellte Raum aus Sicherheitsgründen auch geschlossen sein kann, es versteht sich weiter von selbst, daß der "Maschinenraum" nicht am Container selbst angebracht sein muß, sondern daß für ihn ein gesonderter Container vorgesehen werden kann. Die zur Versorgung des Trainingsbeckens notwendigen Pumpen, die Füllpumpe 10 und die Entleerungspumpe 11 werden von den Antrieben 10.1 bzw. 11.1 angetrieben. Die Füllpumpe 10 entnimmt aus einem Vorratsbehälter 29 (Figur 8) das zur Füllung notwendige Wasser über die Leitung 10.3 und fördert das Wasser über die Leitung 10.2 in das Trainingsbecken 1. Ein Rückschlagventil 14 verhindert bei gefülltem Becken 1 ein Zurückdrücken des Wassers in Richtung Vorratsbehälter 29 (Figur 8). Mit der Entleerungspumpe 11, angetrieben vom Motor 11.1, wird über die Entleerungsleitung 8.3, an deren im Trainingsbecken 1 liegenden Ende ein Saugkorb 15 ggf. mit einem Feinfilter angeordnet sein kann, Wasser dem Trainingsbecken entnommen und über das offene Entleerungsventil 8.1 und die Rückflußleitung 8.3 in das Vorratsbecken 29 zurückgefördert. Eine Sammelleitung 30.1 (Fig. 3) verbindet ggf. mehrere Vorratsbehälter 29, wobei das Einführen zweckmäßig von oben erfolgt, und zwar im freien Fall, woduch ein Rückflußverhinderer in der Entleerungsleitung überflüssig wird.

Wird im Trainingsbecken 1 ein Gegenstrom gewünscht, wird das Gegenstromventil 8.2 geöffnet und das Entleerungsventil 8.1 geschlossen. Das dem Trainingsbecken 1 entnommene Wasser wird dann über eine Auf bereitungsstrecke 12 mit einer Ultraviolett-Bestrahlung (oder einer Ozondosierung) zur Entkeimung und ggf. einer Nacherwärmung 12.1 (Figur 8) und über die Leitung 9 den Gegenstromdüsen 9.2 (Figur 9) zugeleitet, wobei eine Überströmleitung 9.1 die Gegenstromdüsen der beiden Seiten miteinander verbindet. Über dem Laufsteg 7, der über die Leiter 7.1 erreicht werden kann und der mit einem Sicherheitsgeländer 7.2 versehen ist, kann der Schaltschrank 2.1 erreicht werden, von dem aus die gesamte Anlage bedient und gesteuert werden kann. Neben dem Schaltschrank befinden sich das Entleerungsventil 8.1 und das Gegenstromventil 8.2, so daß auch diese Ventile in Reich weite des Bedienungsmannes auf dem Laufsteg liegen. Diese Anordnung ist wichtig, da das Tier, insbesondere ein nervöses Pferd, im Trainingsbecken beobachtet werden muß und der Bedienungsmann bei besonderer Unruhe oder anderen Zwischenfällen sofort die Beckenentleerung einleiten kann.

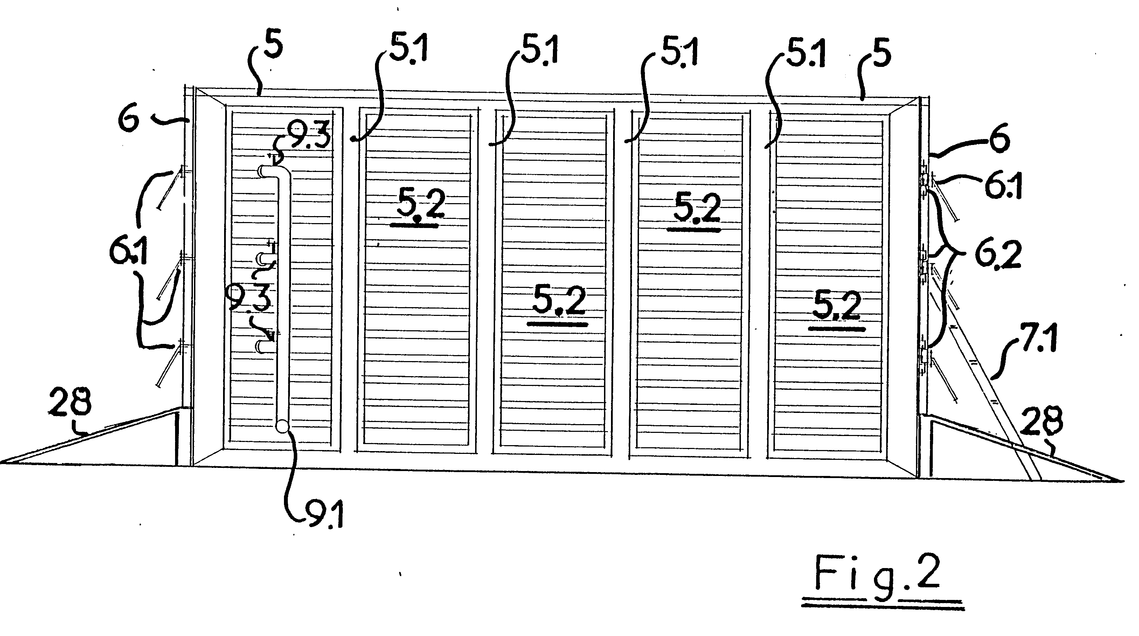

Die Figur 2 zeigt eine Seitenansicht von der dem Laufsteg abgewandten Seite. Diese Ansicht zeigt den zum Erreichen der Statik notwendigen Aufbau der Längsseitenwände mit einem Rahmen und in den Rahmen eingefügten widerstandsfähigen Sickenblechen. Die auf die Schmalseiten aufgesetzten Verschlußtüren 6 sind von ihrer Befestigungsseite und von ihrer Anschlagseite zu erkennen mit den Verriegelungen 6.1 und den Scharnieren 6.2. Hinter dem Container befindet sich die Leiter 7.1, mit der die Plattform 7 (Figur 1) erreicht werden kann. Um das Tier in das Trainingsbecken zu bringen, sind beidseits mobile Rampen 28 angestellt, die für einen bequemen Zugang sorgen. Die über die Überströmleitung 9.1 von der anderen Seite kommend versorgten Gegenstromdüsen 9.2 sind in ihrer Lage zu erkennen durch die mit den Stellventilen 9.3 versehenen Abgänge von der Leitung 9.

Die Figur 3 zeigt eine stirnseitige Ansicht mit Blick auf den Zugang zum Trainingsbecken 1, dessen in der Schmalseite 5 vorgesehene Tür 6 geschlossen ist. Die geschlossene Tür läßt die Scharniere 6.2 und die Verriegelungseinrichtungen 6 1 erkennen, die unten näher erläutert werden. Neben dem Container mit dem Trainingsbecken 1 ist der Laufgang 7, zugängig über die Leite 7.1, angeordnet, der vom Schaltschrank 2.1 abgeschlossen wird. Die Maschinenanordnung unter dem Laufgang ist hier im einzelnen zur besseren Übersichtlichkeit nicht dargestellt, lediglich die Fülleitung 10.2 und die Entleerungsleitung 8.3, die den Container (über die entsprechenden Hilfsvorrichtungen) mit dem Vorratsbehälter 29 verbinden, der in dem dargestellten Fall aus mehreren Einzelbehältern besteht. die über die Verbindungsrohre 30.1 und 30.2 miteinander in Verbindung stehen. Der bzw. die Vorratsbehälter 29 sind mit einem mit einem Feinfilter 19 versehenen Nebenstromkreis versehen. Dieses in seinen Einzelheiten nicht näher dargestellte Feinfilter 19 ist vorteilhaft als Schüttschichtfilter mit einer Schüttschicht aus Quarzsand mit einer Körnung 0,3 bis 1,0 versehen. Dieses Feinfilter 19 wird in Betriebspausen, vorzugsweise nachts eingesetzt, es entnimmt mit seiner Pumpe 19.2 Wasser aus dem Vorratsbehälter 29 und gibt dieses im Feinfilter gereinigte Wasser über die Rückführungsleitung 19.5 in diesen zurück. Vorteilhaft erfolgt die Rückgabe in freiem Fall z.B. über eine Einfüllöffnung 29.2, wodurch das Wasser Gelegenheit hat, Sauerstoff aufzunehmen. Wegen der im Vergleich zum Feststoffilter wesentlich geringeren Filterbelastung ist die in einen Nebenstrom gelegete Filteranordnung geeignet, mit einem kleineren Filter auszukommen. Es versteht sich von selbst, daß bei hinreichend großer Auslegung auch das Feinfilter 19 im Hauptstrom angeordnet sein kann. Zur Reinigung ist das Feinfilter 19 mit einer Gegenspülung versehen, wozu über den Spülanschluß 19.9 und das Spülventil 19.8 Wasser vorzugsweise im Gegenstrom durch die Filterschicht gedrückt wird. Ein Umschaltventil 19.6 in der Rückführungsleitung 19.5 gestattet das Ablassen des nach dem Spülen anfallenden, verunreigten Wassers.

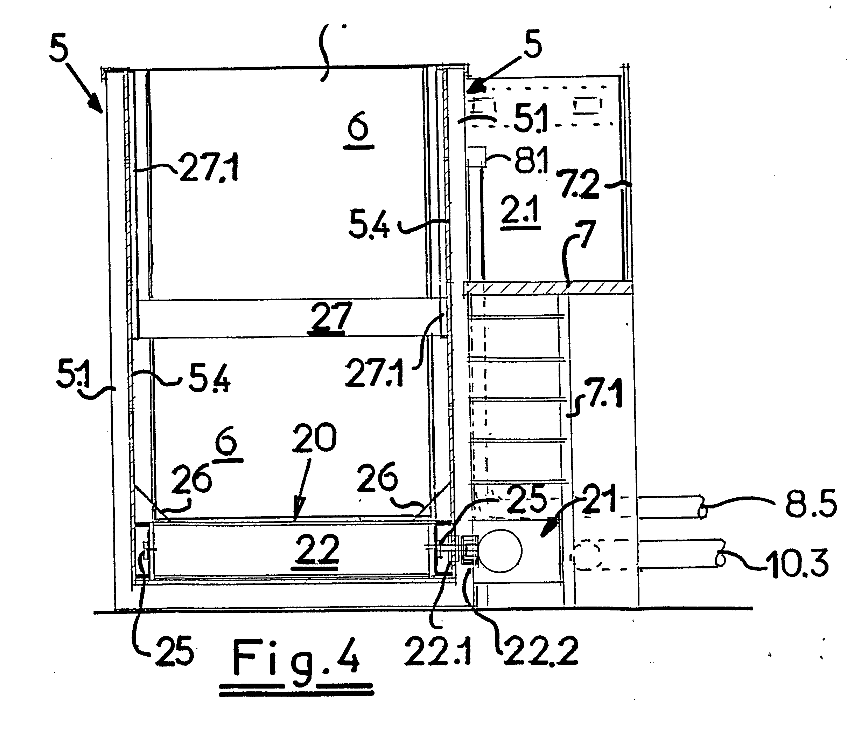

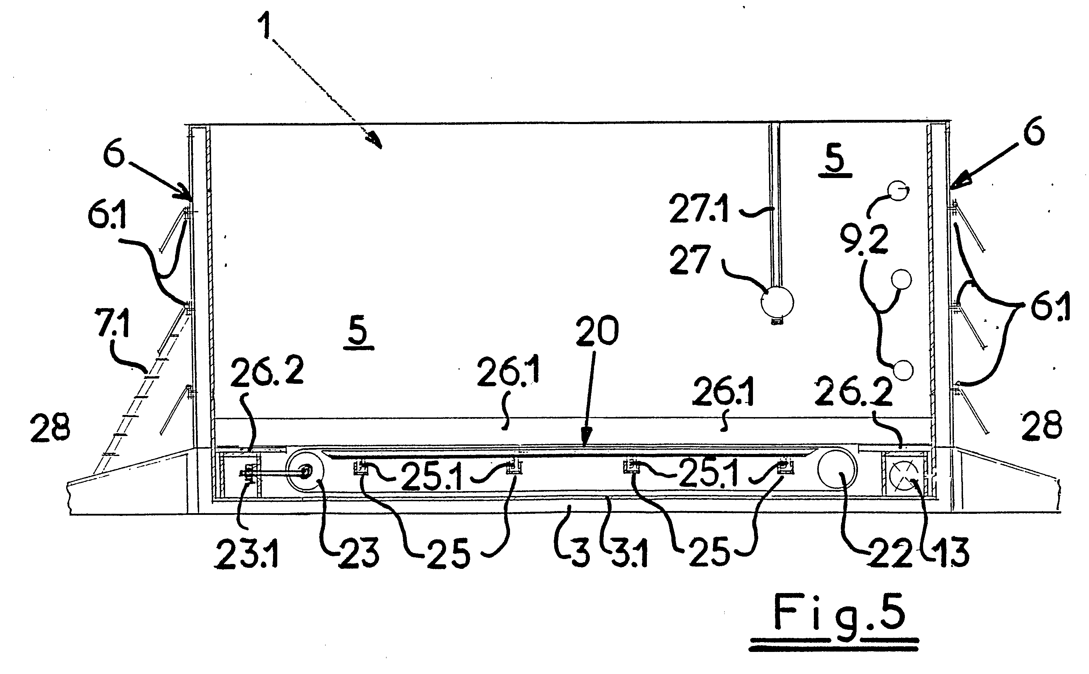

Der in Figur 4 gezeigte Querschnitt läßt den Aufbau der Längsseitenwände 5 erkennen, die aus einem tragenden Rahmen 5.1 mit (hier nicht näher dargestellter Sickenblechauskleidung) und einer inneren, korrosionsfesten Verkleidung 5.4 (vorzugsweise einer Edenstahlblech-Auskleidung) bestehen. Die korrosionsfeste Auskleidung ist am oberen Ende über die tragende Konstruktion hinweggeführt und bildet den oberen Abschluß, dessen Kanten zumindest leicht abgerundet sein sollen. Im unteren Teil befindet sich ein Laufband 20, das über eine Antriebsrolle 22 und eine Umlenkrolle 23 (Figur 5) geführt ist und das mittels des Antriebsaggregats 21 in gewünschter Geschwindigkeit angetrieben werden kann. Dazu ist die angetriebene Rolle 22 mit einer durch eine abgedichtete Durchführung 22.1 geführte Welle mit einer Kupplung 22.2 versehen, die mit der Abtriebswelle des Antriebsaggregats zusammenwirkt. Das Antriebsaggregat ist dabei vorzugsweise ein Gleichstrommotor, dessen Drehzahl mit einem Tacho-Generator überwacht wird und der in der üblichen Weise eines Gleichstrommotors gesteuert oder mittels des Tacho-Generators sogar geregelt werden kann. Um zu vermeiden, daß das Tier mit seinen Hufen vom Laufband abkommt, sind seitliche Schrägflächen als Abweiser 26 vorgesehen. Für die Lagerung der Rollen sind darüber hinaus C-Profile 25 im Grund des Trainingsbeckens 1 angeordnet, die die Lager für die Welle sowohl der Antriebsrolle 22 als auch der Umlenkrolle 23 (Figur 5) aufnehmen.

Die Figur 5 zeigt einen Längsschnitt mit Blick auf die Innenseite einer der Längsseitenwände 5. Im Grunde des Trainingsbeckens 1 ist das Laufband 20 angeordnet, das über die Antriebswalze 22 und über die Umlenkwalze 23 geführt ist. Um das Laufband 20 stets gespannt halten zu können, ist die Umlenkwalze 23 in einem spannbaren Lager angeordnet und kann mit Hilfe der Spannschraube 23.1 verstellt werden. Am unteren Ende der Innenseite der Längsseitenwand 5 sind die Abweiser 26.1 zu erkennen. Im Bereich der Türen sind zum Anschluß an das Laufband 20 Anschlußstücke 26.2 angeordnet, über die das Tier gefahrlos das Laufband betreten kann. Das Laufband selbst ist auf einer Unterlage 24 abgestützt, die ihrerseits auf zwischen den C-Profilen angeordneten Querträgern 25 abgestützt ist, wobei zwischen den Querträgern 25 und der Unterlage 24 Federn 25.1 vorgesehen sind, so daß die Unterlage 24 des Laufbandes 20 sich wie ein Schwingboden verhält. Zur Verminderung der Reibung ist auf der Unterlage 24 eine Kunststoffauflage 24.1 auswechselbar befestigt. Durch diese Art der Befestigung ist es möglich, bei Verschleiß der Kunststoffauflage diese auszutauschen. Im Bereich des Kopfendes befinden sich die Gegenstromdüsen 9.2, die paarweise einander gegenüber liegen. Die in bekannter Weise kugelkopfartig ausgebildeten Düsen lassen sich in gewissen Grenzen einstellen. Durch die paarweise Anordnung wird jedoch auch bei gegeneinander gerichteten Strahlen eine in der Mitte des Trainingsbeckens zur anderen Seite hin gerichtete Strömung erzwungen. Wenn das Tier in der Strömung aufschwimmt, könnte es bei nicht genügender Strömungsgeschwindigkeit einen zu starken Vortrieb bekommen. Um jedoch das Vorwärtskommen zu unterbinden, ist in beiden Längsseitenwänden 5 eine U-Schiene 27.1 vorgesehen als Führung für eine aufschwimmende Trassierstange 27.

Die Figur 6 zeigt eine Einzelheit des Türanschlags, wobei der Aufbau der Tür 6 selbst nicht näher dargestellt ist. Die Tür 6 muß die Zugangsöffnungen 4.1 dichtend verschließen, dazu sind in den Enden der Seitenwände 4 Dichtungen 4.5 vorgesehen, die den drei abzudichtenden Kanten der Tür 6 zugeordnet sind. Diese Dichtungen liegen zweckmäßigerweise in einer Nut, die zum einen gebildet wird von der umgekanteten, korrosionsfesten Verkleidung 4.3, der tragenden Unterlage 4 2 und einer Leiste 4.4, die ihrerseits die Scharniere und die Verriegelungseinrichtungen trägt. In dieser umlaufenden Nut sitzt die entsprechend profiliete Dichtung 4.5, gegen die die Kanten der Tür 6 durch die Verriegelungseinrichtung 6.1 angedrückt werden. Die Verriegelungseinrichtung 6.1 besteht aus einem Bolzen 6.11, auf dem ein Winkelhebel mit Griff 6.12 und Riegel 6.13 angeordnet ist, wobei der Riegel 6.13 auf eine Schrägfläche 6.14 auf der Tür 6 aufläuft. Durch diese vorreiberähnliche Sperre wird die Tür 6 mit iher Kante gegen die Dichtung 4.5 gepresst, so daß eine hinreichende Dichtheit erzielt werden kann. Da jedoch bei gefülltem Behälter die Längsseitenwände 5 aufgrund des Wasserdruckes auseinandergedrückt werden, muß darüber hinaus die Tür 6 auch noch die Funktion eines Zugankers übernehmen. Dazu werden die Scharniere 6.2 verstärkt ausgebildet, vorzugsweise mit zwei seitenwand-festen Flächen 6.21, die gabelartig eine am Türblatt befestigte Lasche 6.22 übergreifen, wobei die Laschen 6.21 und 6.22 eine Bohrung für den Bolzen 6.23 aufweisen. Auf der Gegeneite befindet sich ein Zapfen 6.15, der auf dem umlaufenden Rahmen 4.4 der Seitenwand 4 befestigt ist. Über diesen Zapfen greift ein Paßstück 6.14 mit einer dem Zapfen 6.15 entsprechenden Bohrung. Durch diese Anordnung wird ein Zuganker zwischen den seitenwand-festen Laschen 6.21 und dem seitenwand-festen Zapfen 6.15 erreicht, der einem Auseinanderstreben der unter· Druck stehenden Seitenwände entgegenwirkt. Vorteilhaft werden die Türverriegelungen mittels gesonderter elektrischer, pneumatischer oder elektropneumatischer Sperren gegen ein unbefugtes Öffnen der Türen bei gefülltem Trainingsbecken gesichert. So wird vermieden, daß die Türen des gefüllten Trainingsbeckens entriegelt werden können, was die Gefahr einer Verletzung von Mensch und/oder Tier durch eine durch den Füllungsdruck aufschlagenden Tür oder durch den Schwall des ausströmenden Wassers ausschließt.

Die Figur 7 zeigt ein Ausführungsbeispiel eines Feststoffilters 15, das der Entleerungspumpe 11 nachgeschaltet als Druckfilter betreibbar und somit in einer geschlossenen Führung des zu entleerenden Wassers einsetzbar ist. Dieses Feststoffilter 15 besitzt ein Filtergehäuse 15.1 auf, das mit einem Deckel 15.2 verschlossen ist. In ihm ist ein Filtereinsatz 18 vorgesehen, der z.B. mittels eines Kopfringes 18.2 mit einem Bajonettverschlusses 18.3 auf eine im Filtergehäuse 15.1 vorgesehene Filtereinsatzhalterung 15.3 aufgesetzt und verriegelt werden kann. Das Filtergehäuse 15.1 ist mit einer Einlaufkammer 16.1, in die ein Einlaufstutzen 17.1 mündet, versehen; das in der Filterschicht gereinigte Wassere sammelt sich nach dem Durchlauf in einem Auslaufsammelraum 16.2, und es verläßt das Feststoffilter 15 über einen Auslaudsstutzen 17.2, der von Auslaufsammelraum abgeht. Die Reinigung des Wasser erfolgt im Grundsatz bei jeder Entleerung des Trainingsbeckens 1. Die dabei abgeschiedenen Feststoffe werden durch Entnahme des Filtereinsatzes 18 entfernt, wobei diese Entnahme des Filtereinsatzes in der Regel nach jeder Entleerung des Trainings beckens erfolgt, wobei diese Entnahme durch eine leichte Konizität des Filterzylinders 18.1 begünstigt. Es versteht sich von selbst, daß die in der mit dem Bajonettverschluß 18.3 für den Filtereinsatz 18 vorgesehene Öffnung einen derartige Durchmesser aufweist, der eine leichte Entnahme des Filtereinsatzes 18 erlaubt, wobei ein zusätzlicher Kragen ein Führung übernehmen kann. Als Filterschicht wird vorteilhaft eine mit Öffnungen, insbesondere mit spaltförmigen Öffungen versehenes Lochblech eingesetzt, wobei der Anteil der Lochfläche an der Gesamtfläche größer als 40 % sein sollte. Das Reinigen eines abgezweigten Wasserstromes zum Betrieb vorhandener Gegenstromdüsen 9.3 (Fig. 8) erfolgt wegen der Empfindlichkeit der Gegenstromdüsen in einem diesen vorgeschalteten zusätzlichen Filter, der vorteilhaft in der Aufbereitungsstrecke 12 für das Kreislaufwasser angeordnet ist, wobei diese Aufbereitungsstrecke 12 auch mit einer Entkeimung und/oder einer Nacherwärmung 12.1 kombiniert sein kann.

Die Figur 8 schließlich zeigt ein Fluß-Schema für das Wasser anhand eines Rohrleitungsplanes mit Baukomponenten. Das im Vorratsbehälter 29 vorhandene Wasser wird durch die Füllpumpe 10 über die Fülleitung 10.3 angesaugt und über die Leitung 10.2 in das Trainingsbecken 1 überführt. Bei dieser Art der Füllung ist durch das im Vorratsbehälter 29 vorgegebene Wasservolumen die Füllhöhe des Trainingsbeckens 1 streng vorgegeben. Ein "Zuviel" und damit einen für das Tier überhöhten Waserstand kann es somit nicht geben. In der Leitung 10.2 ist ein Rückschlagventil 14 vorgesehen; dieses Rückschlagventil 14 verhindert bei gefülltem Trainingsbecken 1 und leerem Vorratsbehälter 29 ein Rückströmen über die Leitungen 10.2 und 10.3 sowie über die Pumpe 10. Die Entleerung des Beckens erfolgt über die Entleerungsleitung 8.3 wobei die Entleerungspumpe 11 die Förderung des Wassers übernimmt. Das in die Rückfluß-Rohrleitung eingeschaltetes Feststoffilter 15 erlaubt das Abtrennen fester Wasserverunreinigungen, wie z.B. Haare oder etwa beim Äpfeln eines Pferdes anfallende grobe Verunreinigungen. Dieses Feststoffilter 15 ist dabei im Zuge der Entleerungsleitung 8 der Entleerungspumnpe nach, den anderen Komponenten jedoch vorgeschaltet. Damit werden alle anderen nachgeschalteten Komponenten vor Verschmutzung durch grobe Verunreinigungen bewahrt. Dies gilt auch für die den Kreislauf schließenden Baukomponenten. Als weitere Reinigungsstufe ist ein Feinfilter 19 vorgesehen, das in einem gesonderten Nebenkreislauf zu reinigendes Wasser dem Vorratsbehälter 29 entnimmt und nach der Reinigung in der Filterschicht des Feinfilters 19 in den Vorratsbehälter 29 zurückspeist. Eine eigene Umlaufpumpe 19.2 sorgt für diesen gesonderten Reinigungskreislauf. Die von der Entleerungspumpe 11 über die Entleerungsleitung 8.3 und 8.4 geförderte Wassermenge wird über das Entleerungsventil 8.1 und die Leitung 8.5 in das Vorratsbecken 29 zurückgefördert. Dies ist Regelfall bei Entleerung des Trainingsbeckens. Während des Trainings kann jedoch Bedarf bestehen, im Trainingsbecken 1 eine gerichtete Strömung zu erzwingen. Dazu wird das Entleerungsventil 8.1 geschlossen und das Gegenstromventil 8.2 geöffnet. Über das nun geöffnete Gegenstromventil 8.2 fördert die Entleerungspumpe 11 Wasser im Kreislauf in das Trainingsbecken 1 zurück. Der Kreislauf führt dabei zunächst über eine Aufbereitungsstrecke 12, die beispielsweise mit einem die Gegenstromdüsen schützenden Feinfilter und/oder mit einer Entkeimungsvorrichtung, in der UV-Strahler (oder eine Ozonzugabe o.dgl.) die gewünschte Entkeimung bewirken, und/oder mit einer Nacherwärmung 12.1, die darüber hinaus dafür sorgt, daß das in die Gegenstromanlage gelangende Wasser die gewünschte Temperatur hat, versehen sein kann. Ein Temperaturfühler T überwacht diese Temperatur; dieser Temperaturfühler kann mit dem Schaltschrank verbunden sein und darüber hinaus mit dem Nachheizaggregat 12.1 einen Regelkreis bilden. Der Ausgang erfolgt über die Leitung 9, von der die Zuleitungen zu den Gegenstromdüsen 9.2 abgehen, wobei jede Zuleitung ein Stellventil 9.3 enthält. Um beide Seiten des Trainingsbeckens 1 zu erreichen, ist eine Überströmleitung 9.1 vorgesehen; dadurch ist es möglich, die für die Gegenstromanlage gewünschte Symmetrie der Strömung herzustellen (es versteht sich von selbst, daß die in der Figur 9 gezeichnete Lage der Gegenstromdüsen nicht der Lage im Trainingsbecken entspricht; sie wurde lediglich der besseren Übersichtlichkeit halber so gewählt).

Um jede Gefahr für das zu trainierende Tier auszuschließen, ist es vorteilhaft, auf die oberen Kanten der Längsseitenwände 5 eine verfahrbare Brücke aufzusetzen, die mit einem Sicherheitsgurt versehen ist. Dieser Sicherheitsgurt wird lose um den Leib des Tieres gelegt und er verhindert das Zusammensinken des Tieres etwa im Falle eines Kreislaufversagens.

## Ansprüche

01. Mit Wasser befüllbares Trainingsbecken (1) für Tiere, insbesondere für Pferde, mit Längsseitenwänden (5), Schmalseitenwänden (4) und einer Bodenplatte (3), wobei mindestens eine der Schmalseitenwände (4) eine abgedichtet verschließbare Zugangsöffnung (4.1) aufweist, und wobei das Wasser mittels einer Umwälzpumpe umwälzbar und im Kreislauf aufbereitbar ist, **dadurch gekennzeichnet**, daß das Trainingsbecken (1) containerartig ausgebildet ist und über eine mit Mitteln zur Rückflußverhinderung versehene Füllleitung (10.2, 10.23) und eine Füllpumpe (10) sowie über eine Entleerungsleitung (8.3, 8.4, 8.5) und eine Entleerungspumpe (11) mit einen Vorratsbehälter (29) verbunden ist, wobei zumindest in der Entleerungsleitung (8.3, 8.4, 8.5) Mittel zum Reinigen des zurückfließenden Wassers vorgesehen sind, und daß über seiner Bodenplatte (3) ein über etwa die gesamte Länge des Trainingsbeckens (1) reichendes, von einem äußeren Antrieb antreibbares Laufband vorgesehen ist.

02. Trainingsbecken nach Anspruch 1, **dadurch gekennzeichnet**, daß die einen Rückfluß verhindernden Mittel als druckseitig der Entleerungs-Pumpe (11) in der Rückflußleitung (8.3, 8.4, 8.5) angeordnetes Rückschlagventil (14) ausgebildet sind, und daß dem Rückschlagventil (14) nachgeschaltet ein Abzweig (8.42) mit einem Kreislaufventil (8.2) angeordnet ist, über das das von der Entleerungspumpe (11) geförderte Wasser im Kreislauf zum Trainingsbecken (1) zurückgeleitet wird, wobei zum Einspeisung bei hohem Wasserstand vorzugsweise Gegenstromdüsen (9.2) vorgesehen sind, die nahe einem Ende in den Längsseitenwänden (5) paarweise einander gegenüberliegend angeordnet über die Gegenstromleitung (9) und ggf. die Überströmleitungen (9.1) mit dem Kreislauf- bzw. Gegenstromventil (8.2) in Verbindung stehen.

03. Trainingsbecken nach Anspruch 1 oder 2, **dadurch gekennzeichnet**, daß in die Rückleitung des von der Entleerungs-Pumpe (11) geförderten Wassers dem Kreislaufventil (8.2) nachgeschaltet, eine Aufbereitungsstrecke (12) für das im Kreislauf geführte Wasser vorzugsweise versehen mit einem Entkeimungsgerät angeordnet ist.

04. Trainingsbecken nach Anspruch 2 oder 3, **dadurch gekennzeichnet**, daß in der Aufbereitungssterck (12) eine Nachheizung (12.1) des Kreislaufwassers vorgesehen ist, vorzugsweise mit einem Temperaturfühler (T), der mit dem Heizaggregat temperaturbegrenzend zusammenwirkt.

05. Trainingsbecken nach einem der Ansprüche 1 bis 4, **dadurch gekennzeichnet**, daß als Mittel zum Reinigen des Rückflußwassers ein vorzugsweise als Siebfilter ausgebildetes Feststoffilter (15) vorgesehen ist, bei dem ein vorzugsweise leicht konischer Lochblech- oder ein Spaltstab-Siebzylinder (18.4) mit Schnellverschlüssen in einem Filtergehäuse (16.1) angeordnet ist, das mit einem in das Innere des Siebzylinders (17.4) mündenden Einlaufgehäuse (16.1) mit Zulaufstutzen (17.1) für das Entleerungswasser und mit einem von einem Ablaufsammelraum für das gereinigte Wasser abgehenden, über die Rückflußleitung (8.5) zum Vorratsbehälter (29) führenden Abflußstutzen (17.2) versehen ist.

06. Trainingsbecken nach Anspruch 5, daß als weiter Mittel zum Reinigen des Wassers ein vorzugsweise als Sandfilter ausgebildetes Feinfilter vorgesehen ist, das mit eine weiteren Pumpe Wasser aus dem Vorratsbehälter entnimmt und dieses Wasser nach Durchlauf durch das Sandbett in den Vorratsbehälter zurückspeist.

07. Trainingsbecken nach einem der vorstehenden Ansprüche 1 bis 6, **dadurch gekennzeichnet**, daß seitlich an containerartigen Behälter längs einer der Längsseitenwände (5) mit Abstand vom Boden ein Laufsteg (7), erreichbar vorzugsweise über eine Leiter (7.1) und gesichert mit einem Geländer (7.2) vorgesehen ist, wobei vorzugsweise im Bereich des der Leiter abgewandten Endes des Laufsteges (7) ein die gesamte Anlage steuernder Schaltschrank (2.1) vorgesehen ist und daß das im Zuge der Entleerungsleitung (8.3, 8.4, 8.5) vorgesehene Rückschlagventil (8.1) und ggf. das Kreislauf- bzw. Gegenstromventil (8.2) nahe dem Schaltschrank (2.1) oberhalb des Laufsteges angeordnet sind.

08. Trainingsbecken nach Anspruch 7, **dadurch gekennzeichnet**, daß die Maschinen- und Versorgungsanlage sowie die diese verbindenden Rohrleitungen in einem unter dem Laufsteg (7) vorgesehenen Maschinenraum (2) angeordnet sind, der vor zugsweise mit Platten oder Plattenelementen öffenbar verkleidet ist.

09. Trainingsbecken nach einem der Ansprüche 1 bis 8, **dadurch gekennzeichnet**, daß als Antrieb (21) für das Laufband (20) ein regelbarer Gleichstrommotor vorgesehen ist, dessen Drehzahl mittels eines Tacho-Generators gemessen wird, vorzugsweise, wenn der Meßwert des Tacho-Generators als Regelgröße zum Stellen der Drehzahl benutzt wird.

10. Trainingsbecken nach Anspruch 9, **dadurch gekennzeichnet**, daß unter dem oberen Trum des Laufbandes (20) eine Laufbandauflage (24) vorgesehen ist, die auf einer Anzahl von Federn (25.1) gelagert ist, wobei zwischen den Längsseitenwänden (5) unterhalb der Laufbandauflage (24) verlaufende feste Querträger (25) die festen Lager der Federn (25.1) bilden, wobei die Laufbandauflage (24) vorzugsweise gebildet ist von einer Stahlplatte, auf der eine Kunststoffauflage (24.1) auswechselbar befestigt ist.

11. Trainingsbecken nach Anspruch 9 oder 10, **dadurch gekennzeichnet**, daß zwischen der Durchgangsöffnung (4.1) in der Seitenwand (4) und der dieser Seitenwand zugeordneten Laufbandrolle (22;23) ein vorzugsweise mit Gummi belegten Anschlußstück (26.2) angeordnet ist.

12. Trainingsbecken nach einem der Ansprüche 9 bis 11, **dadurch gekennzeichnet**, daß über die gesamte Längserstreckung hinweg unmittelbar über dem Laufband (20) bzw. der Anschlußstücke (26.2) Enden beidseitig je ein als Schrägfläche ausgebildetes Abweiserprofil (26.1) vorgesehen ist.

13. Trainingsbecken nach einem der Ansprüche 1 bis 12, **dadurch gekennzeichnet**, daß nahe einem Ende des Trainingsbeckens (1) auf den Innenseiten beider Längsseitenwände (5) je ein vertikal verlaufendes C-Profil (27.1) als Führung für eine als Schwimmkörper ausgebildete Trassierstange (27) angeordnet sind, in der die Trassierstange (27) vertikal bewegbar eingebracht ist.

EP 0 401 487 A2

Fig.1

Fig.2

EP 0 401 487 A2

Fig.3

EP 0 401 487 A2

Fig. 4

Fig.5

6.12   6.11   6.1   6.13   6.2
6.14   6.22   6.23

6.15   6.21

6.14   6   6   4.4   4

4   4.4   4.1   Fig.6   4.5 4.3 4.2
4.2 4.3 4.5

17.1

15.2

18.2

16.1

18.3

15.3

15

15.1

18.1

17.2

16.2

# Fig.7

Fig. 6

EP 0 401 487 A2

Fig.8